(19) **Europäisches Patentamt European Patent Office Office européen des brevets**

(11) **EP 4 279 624 A1**

(12) # EUROPEAN PATENT APPLICATION
published in accordance with Art. 153(4) EPC

(43) Date of publication:
**22.11.2023 Bulletin 2023/47**

(21) Application number: **21919641.7**

(22) Date of filing: **10.12.2021**

(51) International Patent Classification (IPC):
*C22C 38/00* (2006.01)  *C22C 38/50* (2006.01)
*C22C 38/54* (2006.01)  *C23G 1/08* (2006.01)
*H01M 8/021* (2016.01)  *H01M 8/12* (2016.01)

(52) Cooperative Patent Classification (CPC):
**C22C 38/00; C22C 38/50; C22C 38/54; C23G 1/08; H01M 8/021; H01M 8/12;** Y02E 60/50

(86) International application number:
**PCT/JP2021/045689**

(87) International publication number:
**WO 2022/153752 (21.07.2022 Gazette 2022/29)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **14.01.2021 JP 2021004147**

(71) Applicant: **NIPPON STEEL Stainless Steel Corporation Tokyo 100-0005 (JP)**

(72) Inventors:
• **HATANO, Masaharu**
  **Tokyo 100-0005 (JP)**
• **MATSUMOTO, Mitsuki**
  **Tokyo 100-0005 (JP)**
• **TAI, Yoshikazu**
  **Tokyo 100-0005 (JP)**
• **KAGEOKA, Kazuyuki**
  **Tokyo 100-0005 (JP)**

(74) Representative: **Vossius & Partner Patentanwälte Rechtsanwälte mbB Siebertstraße 3 81675 München (DE)**

(54) **STAINLESS STEEL MATERIAL FOR SOLID OXIDE FUEL CELLS, METHOD FOR PRODUCING SAME, MEMBER FOR SOLID OXIDE FUEL CELLS, AND SOLID OXIDE FUEL CELL**

(57)     A stainless steel material for solid oxide fuel cells, the stainless steel material containing: on a mass basis, 0.030% or less of C; 1.00% or less of Si; 1.00% or less of Mn; 0.050% or less of P; 0.0030% or less of S; 22.0 to 32.0% of Cr; 2.50% or less of Mo; 0.030% or less of N; 0.30% or less of Al; 0.40% or less of Nb; 0.40% or less of Ti; 1.00% or less of Ni; and 1.00% or less of Cu, an effective amount of Cr represented by the following equation (1) being 24.0 to 35.0%, and the balance being Fe and impurities:

$$\text{effective amount of Cr (\%)} = Cr + 2Mo + 2Si + 5Nb + 2Ti - 3(2C + 3N + Ni + 0.5Mn + 0.2Cu) \quad (1)$$

wherein each of the symbols of the elements represents a content of each of the elements.

**Description**

FIELD OF THE INVENTION

The present invention relates to a stainless steel material for solid oxide fuel cells, a method for producing the same, a member for solid oxide fuel cells, and a solid oxide fuel cell.

BACKGROUND OF THE INVENTION

A conventional solid oxide fuel cell (SOFC) was of a high temperature type having an operating temperature of more than 600°C. However, in recent years, low-temperature operating SOFCs have been proposed to operate in a temperature range of 600°C or less (e.g., Patent Literatures 1 and 2). For reasons of costs, corrosion resistance and the like, stainless steel materials are generally used for the members of such solid oxide fuel cells.

The solid oxide fuel cells have been developed mainly as stationary power sources. Recently, however, it is expected that applications will be expanded to various moving bodies such as commercial and industrial vehicles, cars and aircraft.

[Patent Literature 1] Japanese Patent Application Publication No. 2020-53388 A
[Patent Literature 2] Japanese Patent No. 6696992 B

SUMMARY OF THE INVENTION

Problem to be Solved by the Invention

A member (such as a separator, an interconnector, a current collector, and the like) forming a solid oxide fuel cell requires electrical conductivity. However, since the electrical conductivity of the member decreases as the operating temperature decreases, the electrical conductivity of the member used in conventional solid oxide fuel cells of the high-temperature operating type may not be sufficient.

In addition, when the application is expanded to the moving bodies, the thickness and weight of the member must be reduced. However, when reducing the thickness and weight of the member, thermal deformation tends to occur.

The present invention has been made in order to solve the problems as described above. An object of the present invention is to provide a stainless steel material for solid oxide fuel cells, which has excellent conductivity at a temperature of 600°C or less and can suppress thermal deformation, and a method for producing the same. Also, another object of the present invention is to provide a member for solid oxide fuel cells and a solid oxide fuel cell, which comprise the stainless steel material for solid oxide fuel cells having such properties.

Means for Solving the Problem

As a result of extensive studies for stainless steel materials, the present inventors have found that the above problems can be solved by controlling the composition to a specific composition, and have completed the present invention.

Thus, the present invention relates to a stainless steel material for solid oxide fuel cells, the stainless steel material comprising: on a mass basis, 0.030% or less of C; 1.00% or less of Si; 1.00% or less of Mn; 0.050% or less of P; 0.0030% or less of S; 22.0 to 32.0% of Cr; 2.50% or less of Mo; 0.030% or less of N; 0.30% or less of Al; 0.40% or less of Nb; 0.40% or less of Ti; 1.00% or less of Ni; and 1.00% or less of Cu, an effective amount of Cr represented by the following equation (1) being 24.0 to 35.0%, and the balance being Fe and impurities:

$$\text{effective amount of Cr (\%)} = \text{Cr} + 2\text{Mo} + 2\text{Si} + 5\text{Nb} + 2\text{Ti} - 3(2\text{C} + 3\text{N} + \text{Ni} + 0.5\text{Mn} + 0.2\text{Cu}) \quad (1)$$

wherein each of the symbols of the elements represents a content of each of the elements.

Also, the present invention relates to a method for producing a stainless steel material for solid oxide fuel cells, the method comprising subjecting a slab to hot rolling, followed by cold rolling, the slab comprising: on a mass basis, 0.030% or less of C; 1.00% or less of Si; 1.00% or less or Mn; 0.050% or less of P; 0.0030% or less of S; 22.0 to 32.0% of Cr; 2.50% or less of Mo; 0.030% or less of N; 0.30% or less of Al; 0.40% or less of Nb; 0.40% or less of Ti; 1.00% or less of Ni; and 1.00% or less of Cu, an effective amount of Cr represented by the following equation (1) being 24.0 to 35.0%, and the balance being Fe and impurities:

$$\text{effective amount of Cr (\%)} = Cr + 2Mo + 2Si + 5Nb + 2Ti - 3(2C + 3N + Ni + 0.5Mn + 0.2Cu) \quad (1)$$

wherein each of the symbols of the elements represents a content of each of the elements.

Moreover, the present invention relates to a member for solid oxide fuel cells, the member comprising the stainless steel material for solid oxide fuel cells.

Further, the present invention relates to a solid oxide fuel cell comprising the member for solid oxide fuel cells.

Effects of Invention

According to the present invention, it is possible to provide a stainless steel material for solid oxide fuel cells, which has excellent conductivity at a temperature of 600°C or less and can suppress thermal deformation, and a method for producing the same. According to the present invention, it is also possible to provide a member for solid oxide fuel cells and a solid oxide fuel cell, which comprise the stainless steel material for solid oxide fuel cells having such properties.

BRIEF DESCRIPTION OF THE DRAWINGS

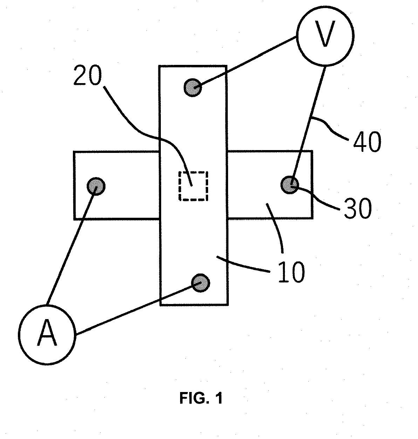

FIG. 1 is a schematic top view of a sample for measuring electrical conductivity.

DETAILED DESCRIPTION OF THE INVENTION

Hereinafter, embodiments of the present invention will be specifically described. It is to understand that the present invention is not limited to the following embodiments, and those which have appropriately added changes, improvements and the like to the following embodiments based on knowledge of a person skilled in the art without departing from the spirit of the present invention fall within the scope of the present invention.

It should be noted that, as used herein, the expression "%" in relation to any component means "% by mass", unless otherwise specified.

The stainless steel material for solid oxide fuel cells according to an embodiment of the present invention (hereinafter, abbreviated as "stainless steel material") contains: 0.030% or less of C; 1.00% or less of Si; 1.00% or less or Mn; 0.050% or less of P; 0.0030% or less of S; 22.0 to 32.0% of Cr; 2.50% or less of Mo; 0.030% or less of N; 0.30% or less of Al; 0.40% or less of Nb; 0.40% or less of Ti: 1.00% or less of Ni; and 1.00% or less of Cu, an effective Cr amount represented by the following equation (1) being 24.0 to 35.0%, and the balance being Fe and impurities.

As used herein, the term "impurities" refers to components contaminated due to various factors of raw materials such as ores and scraps, and the production steps, during the industrial production of stainless steel materials, which are permissible within a range that does not adversely affect the present invention. Further, the term "stainless steel material" is a concept including various shapes such as stainless steel strips, stainless steel sheets and stainless steel foils.

Also, the stainless steel material according to an embodiment of the present invention may optionally contain one or more selected from: 0.0050% or less of B; 0.5% or less of Sn; 0.5% or less of V; 0.5% or less of W; 0.0100% or less of Ca; 0.010% or less of Mg; 0.50% or less of Zr; 0.5% or less of Co; 0.01% or less of Ga; 0.10% or less of Hf, and 0.10% or less of REM.

< 0.030% or less of C>

C is an element that affects the electrical conductivity of the stainless steel material at a temperature of 600°C or less. An excessively high C content will decrease the electrical conductivity. Therefore, the C content should be 0.030% or less, and preferably 0.020% or less, and more preferably 0.015% or less. On the other hand, the lower limit of the C content is not particularly limited, but as the C content is lower, the refining process will take a longer period of time, which may increase the production cost. Therefore, the C content is preferably 0.0002% or more, and more preferably 0.0005% or more.

<1.00% or less of Si>

Si is an element that is effective to increase the heat resistance of the stainless steel material, form a Cr oxide film at a temperature of 600°C or less and suppress thermal deformation. However, if the Si content is too high, a continuous oxide of $SiO_2$ may be formed at an interface of the stainless steel material to decrease the electrical conductivity and decrease the toughness due to hardening. Therefore, the Si content should be 1.00% or less, and preferably 0.80% or less, and more preferably 0.60% or less, and even more preferably 0.30% or less. On the other hand, the lower limit of the Si content is not particularly limited. The Si content is preferably 0.05% or more, and more preferably 0.08% or more, from the viewpoint of obtaining the above effects of Si.

<1.00% or less of Mn>

Mn is an element that is effective to improve the conductivity of the oxide film by producing a $(Mn, Cr)_3O_4$-type oxide as well as to improve the toughness of the stainless steel material. However, an excessively high Mn content may reduce the heat resistance and the effect of suppressing thermal deformation. Therefore, the Mn content should be 1.00% or less, and preferably 0.50% or less. On the other hand, the lower limit of the Mn content is not particularly limited. The Mn content is preferably 0.05% or more, and more preferably 0.08% or more, from the viewpoint of obtaining the above effects of Mn.

<0.050% or less of P>

P is an element that may reduce the toughness of the stainless steel material. Therefore, the P content should be 0.050% or less, and preferably 0.040% or less. On the other hand, the lower limit of the P content is not particularly limited, but as the P content is lower, the refining process will take a longer period of time, which may increase the production cost. Therefore, the P content is preferably 0.001% or more, and more preferably 0.010% or more.

<0.0030% or less of S>

S is an element that forms sulfide-based inclusions and may reduce a power generation efficiency of the SOFC due to evaporation into and poisoning of the electrodes. Therefore, the S content should be 0.0030% or less, and preferably 0.0015% or less. On the other hand, the lower limit of the S content is not particularly limited, but as the S content is lower, the refining process will take a longer period of time, which may increase the production cost. Therefore, the S content is preferably 0.0001% or more, and more preferably 0.0002% or more.

<22.0 to 32.0% of Cr>

Cr is a main element for forming a passive film on the surface of the stainless steel material, and is able to improve properties such as corrosion resistance and heat resistance by the passive film. The Cr content should be 22.0% or more, and preferably 22.5% or more, from the viewpoint of forming the Cr oxide film having improved conductivity at a temperature of 600°C or less and obtaining an effect of suppressing thermal deformation. On the other hand, if the Cr content is too high, properties such as toughness are deteriorated. Therefore, the Cr content is 32.0% or less, and preferably 31.0% or less.

<2.50% or less of Mo>

Mo is a major element for strengthening the passive film on the stainless steel material, and is able to improve properties such as corrosion resistance and heat resistance by the passive film. Mo is also an element for providing effects of promoting the formation of the Cr oxide film on the stainless steel material at a temperature of 600°C or less to improve electrical conductivity, and also reducing a thermal expansion coefficient to suppress thermal deformation. Typically, although Cr oxides produced at 600°C or less contain Fe and thus have lower electrical conductivity, the presence of Mo in the Cr oxides can improve electrical conductivity. However, if the Mo content is too high, there is a risk that the toughness and the effect of suppressing thermal deformation will be impaired due to hardening. Therefore, the Mo content should be 2.50% or less, and preferably 2.00% or less, and more preferably 1.50% or less. On the other hand, the lower limit of the Mo content is not particularly limited. The Mo content is preferably 0.05% or more, and more preferably 0.30% or more, from the viewpoint of obtaining the above effects of Mo.

<0.030% or less of N>

N is an element that may be bonded to Al to form AlN, which will be a starting point of abnormal oxidation, and may reduce the toughness of the stainless steel material. Therefore, the N content should be 0.030% or less, and preferably 0.025% or less. On the other hand, the lower limit of the N content is not particularly limited, but as the N content is lower, the refining process will take a longer period of time, which may increase the production cost. Therefore, the N content is preferably 0.001 % or more, and more preferably 0.010% or more.

<0.30% or less of Al>

Al is an element that is effective to promote the formation of the Cr oxide film on the stainless steel material at a temperatures of 600°C or less to improve electrical conductivity. However, if the Al content is too high, AlN which will be a starting point of abnormal oxidation may tend to be generated, and the toughness of the stainless steel material and the effect of suppressing thermal deformation may be impaired. Therefore, the Al content should be 0.30% or less, and preferably 0.25% or less. On the other hand, the lower limit of Al content is not particularly limited. The Al content is preferably 0.01% or more, and more preferably 0.03% or more, from the viewpoint of obtaining the above effects of Al.

<0.40% or less of Nb>

As with T, Nb is preferentially bonded to C and N to form Nb carbonitrides, and so it is an element for increasing an effective amount of Cr in the stainless steel material. Therefore, Nb promotes the formation of the Cr oxide film at a temperature of 600°C or less and contributes to the improvement of the electrical conductivity. However, if the Nb content is too high, an amount of solutionized Nb that has not been consumed to the production of Nb carbonitrides increases. As a result, the toughness and the effect of suppressing thermal deformation may be deteriorated due to hardening. Therefore, the Nb content should be 0.40% or less, and preferably 0.35% or less. On the other hand, the lower limit of the Nb content is not particularly limited. The Nb content is preferably 0.01% or more, and more preferably 0.05% or more, from the viewpoint of obtaining the above effects of Nb.

<0.40% or less of Ti>

As with Nb Ti is preferentially bonded to C and N to form Ti carbonitrides, and so it is an element for increasing an effective amount of Cr in the stainless steel material. Therefore, Ti promotes the formation of the Cr oxide film at a temperature of 600°C or less and contributes to the improvement of the electrical conductivity. However, an excessively high Ti content results in coarse Ti carbonitrides, which will become the starting points, thereby reducing the toughness and the effect of suppressing thermal deformation. Therefore, the Ti content should be 0.40% or less, and preferably 0.35% or less. On the other hand, the lower limit of Ti content is not particularly limited. The Ti content is preferably 0.01% or more, and more preferably 0.05% or more, from the viewpoint of obtaining the above effects of Ti.

Although the total content of Nb and Ti is not particularly limited, it is preferably 0.32% or more, and more preferably 0.35% or more. Although a ratio of the Nb content to the Ti content (Nb content/Ti content) is not particularly limited, it is preferably 1.0 or less, and more preferably 0.9 or less. By controlling the contents of Nb and Ti to such conditions, the effects of the present invention can be stably obtained.

<1.00% or less of Ni>

Ni is an element that improves the corrosion resistance of the stainless steel material and suppresses the deterioration of the toughness. However, since Ni is an austenite phase stabilizing element, an excessive high Ni content increases the thermal expansion coefficient to decrease the effect of suppressing the thermal deformation. Therefore, the Ni content should be 1.00% or less, and preferably 0.80% or less. On the other hand, the lower limit of the Ni content is not particularly limited. The Ni content is preferably 0.01% or more, and more preferably 0.05% or more, from the viewpoint of obtaining the above effects of Ni.

<1.00% or less of Cu>

Cu is an element that improves the corrosion resistance and electrical conductivity of the stainless steel material. However, since Cu is an austenite phase stabilizing element, an excessive high Cu content increases the thermal expansion coefficient to decrease the effect of suppressing the thermal deformation. Therefore, the Cu content should be 1.00% or less, and preferably 0.80% or less. On the other hand, the lower limit of the Cu content is not particularly limited. The Cu content is preferably 0.01% or more, and more preferably 0.03% or more, from the viewpoint of obtaining the above effects of Cu.

<Effective Amount of Cr being 24.0 to 35.0%>

The effective amount of Cr is represented by the following equation (1):

effective amount of Cr (%) = Cr + 2Mo + 2Si + 5Nb + 2Ti - 3(2C + 3N + Ni + 0.5Mn +

0.2Cu)     (1)

In the equation, each of the symbols of the elements represents a content of each of the elements. Also, "Cr + 2Mo + 2Si + 5Nb + 2Ti" represents a Cr equivalent, and "2C + 3N + Ni + 0.5Mn + 0.2Cu" represents a Ni equivalent.

If the effective amount of Cr is too high, intermetallic compounds such as a σ phase will be deposited at 400 to 600°C, resulting in a decrease in toughness and the amount of Cr being consumed by intermetallic compounds and carbonitrides. Consequently, the effect of suppressing the thermal deformation is deteriorated due to the generation of the intermetallic compounds having deformability different from that of the matrix phase, along with a decrease in electrical conductivity. Therefore, the effective amount of Cr should be 35.0% or less, and preferably 32.0% or less. On the other hand, if the effective amount of Cr is too low, the Cr equivalent is less than the Ni equivalent, so that the formation of the Cr oxide film will be inhibited to decrease the electrical conductivity, and the property of suppressing the thermal deformation will be deteriorated due to an increase in the thermal expansion coefficient. Therefore, the effective amount of Cr should be 24.0% or more, and preferably 25.0% or more.

<0.0050% or less of B>

B is an element that is effective to increase grain boundary strength to improve secondary workability by preferential enrichment at grain boundaries, and the element is optionally contained in the stainless steel material. However, an excessively high B content results in coarsened borides ($Cr_2B$) at the grain boundaries, thereby reducing the effect of suppressing the thermal deformation. Therefore, the B content should be 0.0050% or less, and preferably 0.0030% or less. On the other hand, the lower limit of the B content is not particularly limited. The B content is preferably 0.0002% or more, and more preferably 0.0005% or more, from the viewpoint of obtaining the effects of B.

<0.5% or less of Sn>

Sn is an element that is effective to improve the corrosion resistance and the electrical conductivity, and the element is optionally contained in the stainless steel material. However, an excessive Sn content deteriorates the hot workability and the toughness. Therefore, the Sn content should be 0.5% or less, and preferably 0.3% or less. On the other hand, the lower limit of the Sn content is not particularly limited. The Sn content is preferably 0.01% or more, and more preferably 0.05% or more, from the viewpoint of obtaining the effects of Sn.

<0.5% or less of V>

V is an element that improves the strength of the stainless steel material without impairing its toughness, and the element is optionally contained in the stainless steel material. However, an excessively high V content may deteriorate the workability and toughness, and increases the cost. Therefore, the V content should be 0.5% or less, and preferably 0.4% or less. On the other hand, the lower limit of V content is not particularly limited. The V content is preferably 0.01% or more, and more preferably 0.05% or more, from the viewpoint of obtaining the effects of V.

<0.5% or less of W>

W is an element that improves the strength of the stainless steel material without impairing the toughness, and the element is optionally contained in the stainless steel material. However, an excessively high W content may deteriorate the workability and toughness, and also increases the cost. Therefore, the W content should be 0.5% or less, and preferably 0.4% or less. On the other hand, the lower limit of W content is not particularly limited. The W content is preferably 0.01% or more, and more preferably 0.05% or more, from the viewpoint of obtaining the effects of W.

<0.0100% or less of Ca>

Ca is an element that fixes S to increase oxidation resistance and promotes the formation of the Cr oxide film, and the element is optionally contained in the stainless steel material. However, an excessively high Ca content will increase an amount of inclusions generated to deteriorate the electrical conductivity and the property of suppressing the thermal deformation. Therefore, the Ca content should be 0.0100% or less, and preferably 0.0050% or less. On the other hand, the lower limit of Ca content is not particularly limited. The Ca content is preferably 0.0005% or more, and more preferably 0.0010% or more, from the viewpoint of obtaining the effects of Ca.

<0.010% or less of Mg>

Mg is an element that is effective to refine the stainless steel material, and the element is optionally contained in the stainless steel material. However, an excessively high Mg content increases the amount of inclusions generated to deteriorate the electrical conductivity and the effect of suppressing the thermal deformation. Therefore, the Mg content should be 0.010% or less, and preferably 0.005% or less. On the other hand, the lower limit of Mg content is not particularly limited. The Mg content is preferably 0.0001% or more, and more preferably 0.0005% or more, from the viewpoint of obtaining the effects of Mg.

<0.50% or less of Zr>

Zr is an element that fixes C to increases the effective amount of Cr in the stainless steel material, and the element is optionally contained in the stainless steel material. However, an excessively high Zr content will deteriorate the workability of the stainless steel material. Therefore, the Zr content should be 0.50% or less, and preferably 0.40% or less. On the other hand, the lower limit of Zr content is not particularly limited. The Zr content is preferably 0.001% or more, and more preferably 0.005% or more, from the viewpoint of obtaining the effects of Zr.

<0.5% or less of Co>

Co is an element that improves the strength of the stainless steel material without impairing the toughness, and the element is optionally contained in the stainless steel material. However, an excessively high Co content may deteriorate the workability and the toughness, and also increases the cost. Therefore, the Co content should be 0.5% or less, and preferably 0.4% or less. On the other hand, the lower limit of Co content is not particularly limited. The Co content is preferably 0.01% or more, and more preferably 0.05% or more, from the viewpoint of obtaining the effects of Co.

<0.01% or less of Ga>

Ga is an element that improves the hot workability of the stainless steel material, and the element is optionally contained in the stainless steel material. However, an excessively high Ga content will deteriorate the producibility. Therefore, the Ga content should be 0.01% or less, and preferably 0.005% or less. On the other hand, the lower limit of Ga content is not particularly limited. The Ga content is preferably 0.0001% or more, and more preferably 0.0005% or more, from the viewpoint of obtaining the effects of Ga.

<0.10% or less of Hf>

Hf is an element that fixes C to increase the effective amount of Cr in the stainless steel material, and the element is optionally contained in the stainless steel material. However, an excessively high Hf content will deteriorate the workability of the stainless steel material. Therefore, the Hf content should be 0.10% or less, and preferably 0.08% or less. On the other hand, the lower limit of the Hf content is not particularly limited. The Hf content is preferably 0.001 %, and more preferably 0.005%, from the viewpoint of obtaining the effects of Hf.

<0.10% or less of REM>

REM (rare earth element) preferentially bonds to S and P to form a compound, so that it is possible to suppress the reduction of the electrical conductivity and the effect of suppressing the thermal deformation due to S and P. The REM is optionally contained in the stainless steel material. However, an excessively high REM content may result in hardening of the stainless steel material, so that the toughness and workability may be deteriorated. Therefore, the REM content should be 0.10% or less, and preferably 0.08% or less. On the other hand, the lower limit of the REM content is not particularly limited. The REM content is preferably 0.001% or more, and more preferably 0.005% or more, from the viewpoint of obtaining the effects of REM.

The REM refers to a generic term for two elements, scandium (Sc) and yttrium (Y), and fifteen elements (lanthanides) from lanthanum (La) to lutetium (Lu). These may be used alone or as a mixture. Among the REM, La and Y are preferred.

In the stainless steel material according to an embodiment of the present invention, a crystal orientation ratio ({211} / {200}) of a crystal orientation {211} to a crystal orientation {200} is more than 1.5 and less than 3.5, more preferably 2.0 to 3.0, at a depth position of 10 $\mu$m from the surface.

The electrical conductivity of the stainless steel at the temperature of 600°C or less mainly depends on the Cr concentration in the Cr oxide film ($(Cr, Fe)_2O_3$) on the surface of the stainless steel. By controlling the crystal orientation ratio ({211} / {200}) to the above range, the orientation property between the matrix and the Cr oxide film is improved, and the Cr concentration of ((Cr,Fe)$_2$O$_3$) in the surface layer can be increased, so that the conductivity at the temperature of 600°C or less can be improved.

Here, the above crystal orientation is determined by X-ray diffraction of the surface of the stainless steel material. More particularly, the stainless steel material is cut, and the crystal orientation is measured on the surface using an X-ray diffractometer (RINT 2500 from Rigaku Corporation). For example, a CuKα characteristic X-ray (wavelength (A) = 1.5444 Å) emitted from a copper tube is used for the diffraction. In this case, the {200} is detected at 65.20° and the {211} is detected at 82.58° in the 2θ method. Therefore, an X-ray intensity ratio of these crystal planes is calculated.

In the stainless steel material according to the embodiment of the present invention, the crystal orientation ratio ({211} / {200}) of the crystal orientation of {211} to the crystal orientation of {200} is preferably more than 0.5 and less than 2.0, and more preferably 0.5 to 1.5, at a position at a center in a thickness direction (a position of t/2 in which t is a thickness of the stainless steel material).

The thermal deformation of the stainless steel is affected by the linear expansion coefficient and Young's modulus at the center in the thickness direction. Therefore, by controlling the crystal orientation ratio to the above range, the linear expansion coefficient and Young's modulus are lowered, so that the thermal deformation can be suppressed.

Here, the above crystal orientation can be determined by polishing the stainless material (reducing the thickness) from the surface of the stainless steel material to t/2 and performing X-ray diffraction of the surface. The X-ray diffraction can be performed in the same manner as described above.

Although the shape of the stainless steel material according to the embodiment of the present invention is not particularly limited, it is preferably a sheet shape or a foil shape. When the stainless steel material has the sheet shape or the foil shape, its thickness is, for example, 0.1 to 5.0 mm, and preferably 0.1 to 3.0 mm, and more preferably 0.1 to 1.0 mm, and even more preferably 0.1 to 0.5 mm.

The stainless steel material according to the embodiment of the present invention can be produced according to a known method with the exception that the slab having the above composition is used.

Here, an example of typical methods for producing the stainless steel material according to an embodiment of the present invention will be described. In addition, the method for producing the stainless steel material according to the embodiment of the present invention is not limited to the following production method.

The stainless steel material according to the embodiment of the present invention can be produced by subjecting the slab having the above composition to hot rolling, followed by cold rolling. The conditions for the hot rolling and cold rolling are not particularly limited, and they may be appropriately adjusted according to the composition.

Prior to the cold rolling, it is preferable to subject the hot-rolled material obtained by the hot rolling to acid washing, followed by surface grinding. Also, the hot-rolled material is preferably washed with an acid without being annealed. Such conditions facilitate the control of the crystal orientation of the stainless steel material to the above range.

A method of the surface grinding is not particularly limited, but it may be performed using, for example, a coil grinder. In this case, the count of the grinder may be #120 to #600. The thickness of the surface ground is not particularly limited, but it may be 0.005 to 0.100 mm.

It should be noted that known steps such as annealing and acid washing may be carried out after cold rolling.

On the surface of the stainless steel material according to the embodiment of the present invention produced as described above, a passive film is formed in an oxygen-containing atmosphere (for example, an air atmosphere). The passive film has excellent conductivity at a temperature of 600°C or less. The stainless steel material is also difficult to generate the thermal deformation, and it is, therefore, suitable for use in solid oxide fuel cells, particularly solid oxide fuel cells of low-temperature operation type, which is operated in a temperature range of 600°C or less (for example, 500 to 600°C).

When the stainless steel material according to the embodiment of the present invention is used for solid oxide fuel cells, the stainless steel member can be used for a member such as separators, current collectors (e.g., air electrode current collectors and fuel electrode current collectors), interconnectors, bus bars, end plates, and fuel electrode frames. Among them, the stainless steel material according to the embodiment of the present invention is preferably used for one or more members selected from the separators, the interconnectors, and the current collectors.

The member for solid oxide fuel cells according to an embodiment of the present invention includes the stainless steel material according to the embodiment of the present invention. The solid oxide fuel cell according to the embodiment of the present invention also includes the member for solid oxide fuel cells according to the embodiment of the present invention.

The member for solid oxide fuel cells includes, but not particularly limited to, the various members as described above.

The stainless steel material can be appropriately shaped according to the shapes of the various members. On the surface of the stainless steel material, a conductive coating layer may also be formed. The conductive coating layer is not particularly limited, but it may be formed of materials known in the art. For example, the conductive coating layer can be formed using highly conductive metals such as Ag and Co. The conductive coating layer may also be a single metal layer or an alloy layer, and may have a single layer structure or a laminated structure.

In addition, the stainless steel material may be subjected to modification (roughening) of the passive film from the viewpoint of enhancing adhesion to the conductive coating layer. For example, the modification (roughening) of the passive film can be performed by a known method such as immersing of the stainless steel material in a nitric-hydrofluoric acid solution.

EXAMPLES

While the present invention will be described below in detail with reference to Examples, the present invention is not construed as being limited thereto.

Each slab having each composition as shown in Table 1 was smelted and hot-rolled to form a hot-rolled sheet having a thickness of 3.5 mm, and then washed with an acid without being annealed, and the surface was ground to 0.05 mm with a coil grinder (count of 120). The surface-ground hot-rolled sheet was then cold-rolled to form a cold-rolled sheet having a thickness of 0.1 to 0.6 mm, and then annealed and washed with an acid to obtain a stainless steel material. For the materials produced by this method, Table 2 shows that the annealing of the hot-rolled annealed sheet is "Present" and the surface griding is "Present".

Stainless steel materials were also produced under the same conditions as those of the above production method with the exception that the surface grinding was not performed. For the materials produced by this method, Table 2 shows that the annealing of the hot-rolled sheet is "Absent" and the surface grinding is "Absent".

Furthermore, stainless steel materials were also produced by performing hot rolling under the same conditions as those described above to obtain hot rolled sheets, and then annealing them at 950 to 1050°C, washed with an acid, surface-ground and then cold-rolled. For the materials produced by this method, Table 2 shows that the annealing of the hot-rolled sheet is "Present" and the surface grinding is "Present".

[Table 1]

| | Composition (% by mass) | | | | | | | | | | | | | | Effective Amount of Cr |
| | C | Si | Mn | P | S | Cr | Mo | N | Al | Nb | Ti | Ni | Cu | Others | |
| A1 | 0.008 | 0.18 | 0.20 | 0.033 | 0.0021 | 24.2 | 0.55 | 0.015 | 0.09 | 0.20 | 0.27 | 0.51 | 0.00 | -- | 25.2 |
| A2 | 0.011 | 0.24 | 0.14 | 0.026 | 0.0005 | 22.0 | 0.98 | 0.012 | 0.11 | 0.19 | 0.22 | 0.21 | 0.03 | Mg:0.001 Ca:0.0015 B:0.0002 | 24.6 |
| A3 | 0.005 | 0.10 | 0.15 | 0.021 | 0.0012 | 30.4 | 1.98 | 0.016 | 0.13 | 0.16 | 0.19 | 0.39 | 0.02 | V:0.2 Co:0.1 | 34.2 |
| A4 | 0.004 | 0.06 | 0.08 | 0.030 | 0.0003 | 22.4 | 1.20 | 0.011 | 0.06 | 0.27 | 0.11 | 0.08 | 0.01 | Sn:0.03 | 26.0 |
| A5 | 0.028 | 0.80 | 0.36 | 0.023 | 0.0011 | 23.2 | 0.15 | 0.016 | 0.01 | 0.18 | 0.25 | 0.00 | 0.01 | Zr:0.01 Ga:0.01 | 25.6 |
| A6 | 0.012 | 0.12 | 0.12 | 0.029 | 0.0028 | 28.3 | 2.20 | 0.022 | 0.18 | 0.29 | 0.01 | 0.42 | 0.02 | Y+La:0.03 Hf:0.02 | 32.7 |
| A7 | 0.001 | 0.18 | 0.70 | 0.009 | 0.0001 | 25.8 | 0.05 | 0.009 | 0.23 | 0.31 | 0.07 | 0.15 | 0.25 | -- | 26.2 |
| A8 | 0.006 | 0.20 | 0.18 | 0.018 | 0.0018 | 29.2 | 1.50 | 0.019 | 0.15 | 0.13 | 0.21 | 0.20 | 0.45 | W:0.3 B:0.0012 | 32.3 |
| A9 | 0.004 | 0.25 | 0.18 | 0.025 | 0.0011 | 23.8 | 0.75 | 0.011 | 0.07 | 0.19 | 0.22 | 0.05 | 0.01 | -- | 26.6 |
| A10 | 0.003 | 0.06 | 0.11 | 0.022 | 0.0006 | 22.2 | 1.10 | 0.009 | 0.04 | 0.21 | 0.23 | 0.01 | 0.01 | -- | 25.8 |
| B1 | 0.031 | 0.21 | 0.11 | 0.023 | 0.0005 | 24.3 | 0.80 | 0.013 | 0.08 | 0.21 | 0.22 | 0.05 | 0.06 | | 27.2 |
| B2 | 0.018 | 1.10 | 0.22 | 0.023 | 0.0004 | 23.0 | 0.05 | 0.012 | 0.06 | 0.01 | 0.23 | 0.01 | 0.01 | B:0.0007 | 25.2 |
| B3 | 0.007 | 0.28 | 0.25 | 0.022 | 0.0005 | 21.8 | 0.80 | 0.008 | 0.07 | 0.10 | 0.22 | 0.01 | 0.01 | | 24.4 |
| B4 | 0.005 | 0.16 | 0.09 | 0.023 | 0.0010 | 22.4 | 0.01 | 0.016 | 0.10 | 0.18 | 0.24 | 0.01 | 0.01 | | 23.8 |
| B5 | 0.008 | 0.21 | 0.15 | 0.022 | 0.0003 | 32.1 | 0.40 | 0.013 | 0.08 | 0.22 | 0.23 | 0.10 | 0.15 | V:0.1 W:0.2 | 34.1 |
| B6 | 0.007 | 0.23 | 0.24 | 0.023 | 0.0006 | 23.2 | 2.52 | 0.015 | 0.08 | 0.18 | 0.22 | 0.01 | 0.01 | | 29.5 |
| B7 | 0.008 | 0.33 | 0.15 | 0.022 | 0.0003 | 29.1 | 2.30 | 0.013 | 0.21 | 0.22 | 0.15 | 0.10 | 0.02 | Mg:0.002 Zr:0.01 | 35.1 |

(Remarks) Underlines indicate that they are out of the scope of the present invention. The balance is Fe and impurities.

Subsequently, the crystal orientations {200} and {211} at a depth position of 10 μm from the surface and at the center in the thickness direction of each of the resulting stainless steel materials were measured, and the crystal orientation ratio ({211}/{200}) was determined. The crystal orientation was measured under the conditions as described above. The results are shown in Table 2.

Further, each of the resulting stainless steel materials was evaluated for electrical conductivity and thermal deformation. The evaluation method is as follows.

(1) Electrical Conductivity

Surface modification was performed by immersing each stainless steel material in an aqueous solution containing 5.0% by mass of hydrofluoric acid and 15% by mass of nitric acid (at a liquid temperature of 60°C) for 1 to 5 minutes, followed by a coating treatment to form a conductive coating layer. in the coating treatment, the stainless steel material was adjusted such that a Co plating was formed to have a thickness of 2 to 5 μm on the surface of the surface-modified stainless steel material.

Two of the stainless steel materials each having a conductive coating layer formed (each of the stainless steel materials is, hereinafter, referred to as a "stainless steel material with a conductive coating layer") were exposed to heat at 600°C for 1000 hours in an air atmosphere (a dew point of 20°C; an $H_2O$ concentration of about 2.31%). Subsequently, the two stainless steel materials with a conductive coating layer were used to prepare a sample for measurement as shown in FIG. 1, and the measurement was performed by the four-probe method using a potentiostat. More particularly, it was carried out as follows:

First, a conductive paste (Ag paste) was applied in a square shape (10 mm on a side and 10 μm in thickness) to the center of each of the two stainless steel materials 10 with a conductive coating layer and dried to form conductive portions 20. Subsequently, the conductive portions 20 of the two stainless steel materials 10 with a conductive coating layer were stacked and arranged in a cross shape, and they were then sandwiched between alumina plates, and a weight (200 g) was placed thereon, and the conductive portions 20 were baked in an electric furnace (at 850°C for 30 minutes). The surfaces were shaved using the minitor until the metal matrix was exposed, and wiring attachment portions 30 as shown in FIG. 1 were formed. Subsequently, silver wires 40 (having a diameter of 0.3 mm) were wound around the wiring attachment portions 30, and a conductive paste was applied thereto and dried at 150°C for 30 minutes to obtain a sample for measurement. The sample for measurement was then placed in a high-temperature electrochemical measurement device, and a voltage-current curve was obtained by the four-probe method using a potentiostat. In the measurement, the measurement temperature was 600°C and the voltage was swept up to 10 mV. Also, a resistance value was calculated from a slope of the voltage-current curve. In the evaluation, a case where the resistance value was 20 mΩ·cm$^2$ or less was determined to be A (the conductivity at the high temperature was particularly improved), and a case where the resistance value was more than 20 mΩ·cm$^2$ and 30 mΩ·cm$^2$ or less was determined to be B (the conductivity at the high temperature was improved), and a case where the resistance value was more than 30 mΩ·cm$^2$ was determined to be C (the conductivity at the high temperature was insufficient).

(2) Thermal Deformation

The thermal deformation of each stainless steel material was evaluated by the testing method for flexural strength defined in JIS R 1604: 2008. More particularly, a three-point bending method with a distance between external fulcrums of 30 mm was used, and a sample having 4 mm×40 mm was prepared by cutting each stainless steel material. The sample and a three-point bending tester were placed in a muffle furnace and heated in the air atmosphere at 650°C, and the flexural strength at which the sample was thermally deformed was then measured. A case where the flexural strength was 150 MPa or more was determined to be A (the effect of suppressing the thermal deformation is higher), and a case where the flexural strength was less than 150 MPa was determined to be C (the effect of suppressing the thermal deformation is lower).

Table 2 shows the above evaluation results.

[Table 2]

| Test Nos. | Steel Nos. | Annealing of Hot-Rolled Sheet | Surface Grinding | Crystal Orientation Ratio ({211}/{200}) | | Electrical Conductivity | Thermal Deformation | Classification |
|---|---|---|---|---|---|---|---|---|
| | | | | Depth of 10 μm from Surface | Center in Thickness Direction | | | |
| 1 | A1 | Present | Present | 1.6 | 1.8 | B | A | Example |
| 2 | A1 | Absent | Present | 2.8 | 0.7 | A | A | Example |
| 3 | A1 | Absent | Absent | 1.5 | 0.7 | B | A | Example |
| 4 | A2 | Absent | Present | 3.3 | 1.0 | B | A | Example |
| 5 | A3 | Absent | Present | 1.6 | 0.6 | B | A | Example |
| 6 | A4 | Present | Present | 1.7 | 1.9 | B | A | Example |
| 7 | A4 | Absent | Present | 2.5 | 1.0 | A | A | Example |
| 8 | A5 | Absent | Present | 2.7 | 1.1 | B | A | Example |
| 9 | A6 | Absent | Present | 3.0 | 1.3 | B | A | Example |
| 10 | A7 | Absent | Present | 2.9 | 0.8 | B | A | Example |
| 11 | A8 | Present | Present | 1.6 | 1.7 | B | A | Example |
| 12 | A8 | Absent | Present | 2.2 | 0.6 | A | A | Example |
| 13 | A9 | Absent | Present | 2.5 | 0.8 | A | A | Example |
| 14 | A10 | Present | Present | 1.8 | 1.7 | B | A | Example |
| 15 | B1 | Absent | Present | 3.2 | 1.1 | C | A | Comp. |
| 16 | B2 | Absent | Present | 3.3 | 1.0 | C | A | Comp. |
| 17 | B3 | Absent | Present | 3.4 | 1.2 | C | C | Comp. |
| 18 | B4 | Absent | Present | 32 | 1.1 | C | C | Comp. |
| 19 | B5 | Absent | Present | 1.5 | 0.4 | B | C | Comp. |
| 20 | B6 | Absent | Present | 1.6 | 0.5 | B | C | Comp. |
| 21 | B7 | Absent | Present | 1.4 | 0.3 | C | C | Comp. |

(Remarks) Underlines indicate that they are out of the scope of the present invention.

EP 4 279 624 A1

11

As shown in Table 2, each of the stainless steel materials of Test Nos. 1 to 14 (Examples) had the predetermined composition, so that the electrical conductivity was improved and the effect of suppressing the thermal deformation was higher. In particular, each of the stainless steel materials of Test Nos. 2, 7, 12 and 13 had the preferable composition and omitted the annealing of the hot-rolled sheets so that the crystal orientation ratio was in the particularly preferable range and the electrical conductivity was very good. Also, from the comparison of Test No. 2 with Test No. 3, it was confirmed that the crystal orientation ratio at a depth position of 10 $\mu$m from the surface falls within the preferable range and the conductivity tends to be improved by performing the surface grinding.

On the other hand, each of the stainless steel materials of Test Nos. 15 to 21 (Comparative Examples) had the composition or effective amount of Cr which were out of the predetermined ranges, so that one or both of the electrical conductivity and the suppressing effect were insufficient.

As can be seen from the above results, according to the present invention, it is possible to provide a stainless steel material for solid oxide fuel cells, which has excellent conductivity at a temperature of 600°C or less and can suppress thermal deformation, and a method for producing the same. According to the present invention, it is also possible to provide a member for solid oxide fuel cells and a solid oxide fuel cell, which comprise the stainless steel material for solid oxide fuel cells having such properties.

Description of Reference Numerals

10 stainless steel material with conductive coating layer
20 conductive portion
30 wiring attachment portion
40 silver wire

**Claims**

1. A stainless steel material for solid oxide fuel cells, the stainless steel material comprising: on a mass basis, 0.030% or less of C; 1.00% or less of Si; 1.00% or less of Mn; 0.050% or less of P; 0.0030% or less of S; 22.0 to 32.0% of Cr; 2.50% or less of Mo; 0.030% or less of N; 0.30% or less of Al; 0.40% or less of Nb; 0.40% or less of Ti; 1.00% or less of Ni; and 1.00% or less of Cu, an effective amount of Cr represented by the following equation (1) being 24.0 to 35.0%, and the balance being Fe and impurities:

$$\text{effective amount of Cr (\%) = Cr + 2Mo + 2Si + 5Nb + 2Ti - 3(2C + 3N + Ni + 0.5Mn + 0.2Cu)} \quad (1)$$

wherein each of the symbols of the elements represents a content of each of the elements.

2. The stainless steel material for solid oxide fuel cells according to claim 1, wherein the stainless steel material further comprises one or more selected from: 0.0050% or less of B; 0.5% or less of Sn; 0.5% or less of V; 0.5% or less of W; 0.0100% or less of Ca; 0.010% or less of Mg; 0.50% or less of Zr; 0.5% or less of Co; 0.01% or less of Ga; 0.10% or less of Hf, and 0.10% or less of REM, on a mass basis.

3. The stainless steel material for solid oxide fuel cells according to claim 1 or 2, wherein a crystal orientation ratio ({211} / {200}) of a crystal orientation {211} to a crystal orientation {200} is more than 1.5 and less than 3.5 at a depth position of 10 $\mu$m from the surface.

4. The stainless steel material for solid oxide fuel cells according to any one of claims 1 to 3, wherein a crystal orientation ratio ({211} / {200}) of a crystal orientation {211} to a crystal orientation {200} is more than 0.5 and less than 2.0 at a position at a center in a thickness direction.

5. The stainless steel material for solid oxide fuel cells according to any one of claims 1 to 4, wherein the stainless steel material is used for one or more members selected from separators, interconnectors and current collectors.

6. A method for producing a stainless steel material for solid oxide fuel cells, the method comprising subjecting a slab to hot rolling, followed by cold rolling, the slab comprising: on a mass basis, 0.030% or less of C; 1.00% or less of Si; 1.00% or less or Mn; 0.050% or less of P; 0.0030% or less of S; 22.0 to 32.0% of Cr; 2.50% or less of Mo; 0.030% or less of N; 0.30% or less of Al; 0.40% or less of Nb; 0.40% or less of Ti; 1.00% or less of Ni; and 1.00% or less of Cu, an effective amount of Cr represented by the following equation (1) being 24.0 to 35.0%, and the balance being Fe and impurities:

$$\text{effective amount of Cr (\%)} = Cr + 2Mo + 2Si + 5Nb + 2Ti - 3(2C + 3N + Ni + 0.5Mn + 0.2Cu) \quad (1)$$

wherein each of the symbols of the elements represents a content of each of the elements.

7. The method for producing a stainless steel material for solid oxide fuel cells according to claim 6, wherein the slab further comprises one or more selected from: 0.0050% or less of B; 0.5% or less of Sn; 0.5% or less of V; 0.5% or less of W; 0.0100% or less of Ca; 0.010% or less of Mg; 0.50% or less of Zr; 0.5% or less of Co; 0.01% or less of Ga; 0.10% or less of Hf, and 0.10% or less of REM, on a mass basis.

8. The method for producing a stainless steel material for solid oxide fuel cells according to claim 6 or 7, wherein prior to the cold rolling, a hot-rolled material obtained by the hot rolling is subjected to acid washing, followed by surface grinding.

9. The method for producing a stainless steel material for solid oxide fuel cells according to claim 8, wherein the hot-rolled material is subjected to acid washing without being annealed.

10. A member for solid oxide fuel cells, the member comprising the stainless steel material for solid oxide fuel cells according to any one of claims 1 to 5.

11. A solid oxide fuel cell comprising the member for solid oxide fuel cells according to claim 10.

FIG. 1

## INTERNATIONAL SEARCH REPORT

International application No.

**PCT/JP2021/045689**

| A. | CLASSIFICATION OF SUBJECT MATTER |
|---|---|

***C22C 38/00***(2006.01)i; ***C22C 38/50***(2006.01)i; ***C22C 38/54***(2006.01)i; ***C23G 1/08***(2006.01)i; ***H01M 8/021***(2016.01)i;
***H01M 8/12***(2016.01)i
FI: C22C38/00 302Z; C22C38/50; C22C38/54; C23G1/08; H01M8/12 101; H01M8/021

According to International Patent Classification (IPC) or to both national classification and IPC

| B. | FIELDS SEARCHED |
|---|---|

Minimum documentation searched (classification system followed by classification symbols)

C22C38/00-38/60; C23G1/08; H01M8/021; H01M8/12

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT | |
|---|---|---|

| Category* | Citation of document, with indication, where appropriate, of the relevant passages | Relevant to claim No. |
|---|---|---|
| X | WO 2014/010680 A1 (NIPPON STEEL & SUMIKIN STAINLESS STEEL CORPORATION) 16 January 2014 (2014-01-16) claims, paragraphs [0038], [0041], table 1 | 1-2, 5-11 |
| A | | 3-4 |
| X | WO 2018/008658 A1 (NIPPON STEEL & SUMIKIN STAINLESS STEEL CORPORATION) 11 January 2018 (2018-01-11) claims, paragraphs [0079], [0085], tables 1, 3 | 1-2, 5-11 |
| A | | 3-4 |
| X | JP 2017-125248 A (NIPPON STEEL & SUMIKIN STAINLESS STEEL CORPORATION) 20 July 2017 (2017-07-20) claims, paragraphs [0035]-[0038], table 1 | 1-2, 5-11 |
| A | | 3-4 |
| A | JP 2005-226083 A (NISSHIN STEEL CO LTD) 25 August 2005 (2005-08-25) claims, paragraph [0024], table 1 | 1-11 |

☑ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **21 February 2022** | **01 March 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**

International application No.

**PCT/JP2021/045689**

### C.    DOCUMENTS CONSIDERED TO BE RELEVANT

| Category* | Citation of document, with indication, where appropriate, of the relevant passages | Relevant to claim No. |
|---|---|---|
| A | CN 101195894 A (JILIN INSTITUTE OF CHEMICAL TECHNOLOGY) 11 June 2008 (2008-06-11) claims, table 1 | 1-11 |
| A | CN 111876661 A (NINGBO BAOXIN STAINLESS STEEL CO., LTD.) 03 November 2020 (2020-11-03) claims, table 1 | 1-11 |

Form PCT/ISA/210 (second sheet) (January 2015)

EP 4 279 624 A1

**INTERNATIONAL SEARCH REPORT**
Information on patent family members

International application No.

**PCT/JP2021/045689**

| Patent document cited in search report | | | Publication date (day/month/year) | Patent family member(s) | | | Publication date (day/month/year) |
|---|---|---|---|---|---|---|---|
| WO | 2014/010680 | A1 | 16 January 2014 | EP 2871251 A1 claims, paragraphs [0040], [0046], table 1 | | | |
| | | | | CN | 104379790 | A | |
| | | | | JP | 2014-31572 | A | |
| WO | 2018/008658 | A1 | 11 January 2018 | EP 3480334 A1 claims [0067], [0073], tables 1, 2 | | | |
| | | | | CN | 109196133 | A | |
| JP | 2017-125248 | A | 20 July 2017 | (Family: none) | | | |
| JP | 2005-226083 | A | 25 August 2005 | (Family: none) | | | |
| CN | 101195894 | A | 11 June 2008 | (Family: none) | | | |
| CN | 111876661 | A | 03 November 2020 | (Family: none) | | | |

Form PCT/ISA/210 (patent family annex) (January 2015)

**EP 4 279 624 A1**

REFERENCES CITED IN THE DESCRIPTION

**Patent documents cited in the description**

- JP 2020053388 A
- JP 6696992 B